# EUROPÄISCHE PATENTANMELDUNG

(11) **EP 3 255 913 A1**
(43) Veröffentlichungstag der Anmeldung: **13.12.2017**
(21) Anmeldenummer: 16002359.4
(22) Anmeldetag: 25.10.2016
(51) Int. Cl.: H04W 8/28, H04Q 3/00

(54) **KOSTENARME RUFNUMMERNPORTIERUNG**

(30) Priorität: 26.10.2015 EP 15003077
(71) Anmelder: Jehnke, Baldur, 13403 Berlin (DE)
(72) Erfinder: Jehnke, Baldur, 13403 Berlin (DE)

(57) **Zusammenfassung**

Die Kosten für eine Rufnummernmitnahme beim Wechsel zu einer anderen Mobilfunkgesellschaft betragen gegenwärtig ca. Euro 30.-; sie sind deswegen so hoch , weil die Mobilfunkgesellschaften untereinander nicht gut vernetzt sind. Wir schlagen hier ein Verfahren vor, das die (natürlich) gute Vernetzung des Teilnehmers mit seiner Mobilfunkgesellschaft und die gute Vernetzung der Mobilfunkgesellschaften mit dem Rufnummernauskunftserver ausnutzt, um die Portierung fast vollautomatisch und damit kostenarm durchzuführen. Dazu sendet die bisherige Mobilfunkgesellschaft an den Server einen kurzen Übergabecode zusammen mit der Telefonnummer, der bisherigen IMSI ihres NochTeilnehmers, dem Datum des Übergabetags und einer Geheimzahl. Dem NochTeilnehmer sendet sie diese Geheimzahl auf sein Handy ; dieser kann dann über seine neue Mobilfunkgesellschaft dem Server die (beibehaltene) Telefonnummer, das Datum, die neue IMSI und die Geheimzahl mitteilen, so daß im Server diese neuen Daten eingetragen werden und bei einer Anfrage die IMSI der neuen Mobilfunkgesellschaft mitgeteilt wird. Durch die Geheimzahl wird das Verfahren vor Mißbrauch geschützt.

## Beschreibung

Da die Mobilfunkgesellschaften nicht gut vernetzt sind, erfordert die RufnummernPortierung, bei der ja sichergestellt sein muß, daß der Teilnehmer, der die Mobilfunkgesellschaft wechselt, wirklich der Besitzer/Eigentümer der Rufnummer ist, einen erheblichen Aufwand : die Mobilfunkgesellschaften verrechnen dafür ca. Euro 30.-Wir lösen das Problem, die Rufnummernportierung zu geringen Kosten durchzuführen dadurch, daß wir die hervorragende Vernetzung zwischen Teilnehmer und Mobilfunkgesellschaft, die eine sichere Identifizierung des Teilnehmers und seine Zuordnung zur Rufnummer garantiert, ausnutzen, um den ganzen Vorgang fast vollautomatisch , und damit kostenarm, ablaufen lassen. Dazu gehen wir folgendermaßen vor :
1. der Teilnehmer sendet über sein Handy (mit der bisherigen SIM- Karte) an seine bisherigeMobilfunkgesellschaft einen kurzen Code, der besagt, daß er am angegebenen Datum zu einer anderen Mobilgesellschaft wechseln und seine Rufnummer mitnehmen will.
2. die bisherige Mobilfunkgesellschaft sendet dem Teilnehmer, den sie eindeutig über seine SIM-Karte identifizieren und als Inhaber der Rufnummer bestätigen kann, eine Geheimzahl (z.B. 32 bit), mit der sich der Teilnehmer gegenüber Dritten als Besitzer der Rufnummer ausweisen kann. Und an den Rufnummern-auskunft-server sendet die Mobilfunkgesellschaft einen kurzen Übergabe-Code, der dieselbe Geheimzahl enthält, zusammen mit der Angabe der Daten des Teilnehmers (Rufnummer und bisherige IMSI) und dem Datum der Übergabe.
3. mit der Rufnummer und der Geheimzahl kann sich der Teilnehmer an eine neue Mobilfunkgesellschaft wenden, die nun dem Rufnummern-auskunft-server einen Übernahme-Code sendet, der die Rufnummer, das Übernahmedatum und die neue IMSI enthält, zusammen mit der Geheimzahl.
4. der Rufnummern-auskunft-server kann auf zwei Arten gebaut sein :
   a, es existiert ein eigener, kleiner Portierungs-server, der an den größeren Rufnummern-auskunft -server angeschlossen ist und den man über die Adresse des größeren Servers ansprechen kann. Dieser Portierungs-server trägt das Rufnummernübergabe-Datenpaket, das er von der früheren Mobilfunkgesellschaft erhalten hat, unter dem Datum des Übernahmetages in eine Liste ein, ebenso das Übernahme-Datenpaket der neuen Mobilfunkgesellschaft. An jedem Tag sortiert der Portierungsserver alle Datenpakete , die dieses Datum tragen, nach Rufnummern. Dabei kommen die beiden Pakete (Übergabe und Übernahme) nebeneinander zu liegen, da sie dieselbe Rufnummer enthalten. Und dann kann der Portierungs-server die beiden Geheimzahlen auf Gleichheit prüfen und im Übereinstimmungsfall dem angeschlossenen Rufnummern-auskunft-server die Änderung mitteilen.
   b, statt in einen extra Portierung-server kann das Übergabe/Übernahme-Verfahren auch in den Sortierungsvorgang, den der Rufnummen-Auskunft-server zur Übernahme neuer Rufnummern durchführt, integriert sein.

## Patentansprüche

1. Rufnummernportierung, **dadurch gekennzeichnet,**
**daß** wir die hervorragende Vernetzung des Mobilfunkteilnehmers mit der MobilfunkGesellschaft nutzen, um die Identität des Rufnummernbesitzers automatisch festzustellen und um ihn durch automatische Übergabe einer Geheimzahl (ggf. auf sein Handy) in die Lage zu versetzen, sich gegenüber einem Dritten z.B,. dem Rufnummern-auskunft-server durch Vorweisen dieser Geheimzahl als Rufnummernbesitzer ausweisen zu können, wobei die Mobilfunkgesellschaft diesem Dritten, mit dem sie gut vernetzt ist, diese Geheimzahl und die Rufnummer automatisch mitteilt, so daß dann der Rufnummernbesitzer sich an diesen Dritten wenden kann (i.a. indirekt, d.h. über seine neue Mobilfunkgesellschaft), um eine Änderung der Eintragung zu bewirken.
